# EUROPEAN PATENT SPECIFICATION

(11) **EP 4 376 588 B1**
(45) Date of publication and mention of the grant of the patent: **25.11.2026**
(21) Application number: 22754642.1
(22) Date of filing: 21.07.2022
(51) Int. Cl.: A01D 41/14, A01D 45/02

(54) **DUAL VARIABLE FEEDER DRIVE FOR AGRICULTURAL VEHICLE**
VARIABLER DOPPELZUFUHRANTRIEB FÜR LANDWIRTSCHAFTLICHES FAHRZEUG
ENTRAÎNEMENT DE DISPOSITIF D'ALIMENTATION VARIABLE DOUBLE POUR VÉHICULE AGRICOLE

(30) Priority: 26.07.2021 US 202117385267
(43) Date of publication of application: 05.06.2024
(73) Proprietor: CNH Industrial Belgium NV, 8210 Zedelgem (BE)
(72) Inventor: HESSION, Adam L., New Holland, Pennsylvania 17557 (US)
(74) Representative: CNH Industrial IP Department
(86) International application number: PCT/US2022/037858
(87) International publication number: WO 2023/009378

(56) References cited:
- EP-A1- 2 936 963
- EP-A1- 2 995 188
- EP-A1- 3 150 054
- US-A- 5 921 070
- US-A1- 2019 090 418

## Description

### FIELD OF THE INVENTION

The present invention relates to agricultural vehicles. More specifically, the present invention relates to a dual variable feeder drive for an agricultural vehicle, such as a combine harvester.

### BACKGROUND OF THE INVENTION

As is described in U.S. Patent No. 10,602,666 to CNH America LLC (the '666 Patent) an agricultural harvester known as a "combine" is historically termed such because it combines multiple harvesting functions with a single harvesting unit, such as picking, threshing, separating, and cleaning. A combine includes a header which removes the crop from a field, and a feeder housing which transports the crop matter into a threshing rotor. The threshing rotor rotates within a perforated housing, which may be in the form of adjustable concaves, and performs a threshing operation on the crop to remove the grain. The threshing rotor is provided with rasp bars that interact with the crop matter in order to further separate the grain from the crop matter, and to provide positive crop movement. Once the grain is threshed, the grain is cleaned using a cleaning system. The cleaning system includes a cleaning fan which blows air through oscillating sieves to discharge chaff and other debris toward the rear of the combine. Non-grain crop material, such as straw, from the threshing section proceeds through a straw chopper and out the rear of the combine. Clean grain is transported to a grain tank onboard the combine.

A corn header, which is attachable to the feeder of the combine, generally includes a conveyor, row units, and accompanying drive architecture to power the header. The conveyor is disposed aft of the row units and it may be in the form of a conveyor belt, an auger with a tubular shaft having left and right flighting, or a combination of both. The row units generally include snouts, gathering chains, and stalk rolls. The snouts are conically shaped to pass in between the rows of corn, defining a designated passageway in between the snouts for the rows of corn to travel therein. Each row unit also includes respective gear boxes to drive the gathering chains and stalk rolls. Generally, the respective gear boxes are all driven by a single rotating cross shaft, which in turn is operably driven by the power take off (PTO) shaft of the agricultural vehicle. The PTO shaft is located on the feeder of the vehicle and has two ends, each of which is connected to respective shafts on the header for powering said gear boxes.

As is described in U.S. Patent No. 8,534,036 (the '036 Patent) a corn header has at least two feed and snapping units (i.e., row units) which are driven by a drive shaft at the same operating speed, and each of which is equipped with a snapping gap and an intake conveyor mechanism which draws the plants into the snapping gap which is used to separate crops from the plants. The corn header also has a chopping device for fragmentizing the stalks of the plants, which is disposed downstream of the particular intake conveyor mechanism. The chopping unit has a drive which can be used to adapt the drive speed of the chopping unit when the operating speed of the row unit changes. The corn header includes internal gear boxes for driving the chopping units at a different speed than the row units, as required. The chopping units and row units receive power from the same PTO shaft on the combine feeder.

European patent application EP 2 936 963 A1 discloses a header for an agricultural harvester with a plurality of row units, a plurality of feed/snapping units, and a plurality of chopping units. Each feed/snapping unit is associated with a respective said row unit and operable at a first operating speed. Each chopping unit is associated with at least one respective feed/snapping unit and operable at a constant second operating speed, independent of the first operating speed.

Described herein are two variable speed PTO shafts on the combine feeder. In general, the PTO shafts may be used for independently driving two components on a header (for example) at different speeds. For example, the PTO shafts may be used for independently driving the row units and chopping units at different speeds. As another example, the two PTO shafts may be used for powering the lateral belts and sickle bar on a draper header. Including two variable speed PTO shafts on the combine feeder reduces complexities and requirements for gear boxes in the headers.

### SUMMARY OF THE INVENTION

According to one aspect of the invention, an agricultural vehicle includes a feederhouse according to claim 1.

According to another aspect of the invention, a method of operating the feederhouse of this agricultural vehicle is provided.

### BRIEF DESCRIPTION OF THE DRAWINGS

The above-mentioned and other features and advantages of this invention, and the manner of attaining them, will become more apparent and the invention will be better understood by reference to the following description of an embodiment of the invention taken in conjunction with the accompanying drawings, wherein:
FIG. 1 is a side view of a combine harvester including a feeder and a header mounted to the feeder;
FIG. 2 is front elevation view of the combine of FIG. 1 shown schematically depicting the feeder drives connected to the header drives; and
FIG. 3 is a schematic illustration of a corn header including header drives that are independently connected to a row unit and a chopping unit of the header.

### DETAILED DESCRIPTION OF THE INVENTION

Corresponding reference characters indicate corresponding parts throughout the several views. The exemplification set out herein illustrates an embodiment of the invention, in one form, and such exemplification is not to be construed as limiting the scope of the invention in any manner.

Inasmuch as various components and features of harvesters are of well-known design, construction, and operation to those skilled in the art, the details of such components and their operations will not generally be discussed in significant detail unless considered of pertinence to the present invention or desirable for purposes of better understanding.

In the drawings, like numerals refer to like items, certain elements and features may be labeled or marked on a representative basis without each like element or feature necessarily being individually shown, labeled, or marked, and certain elements are labeled and marked in only some, but not all, of the drawing figures.

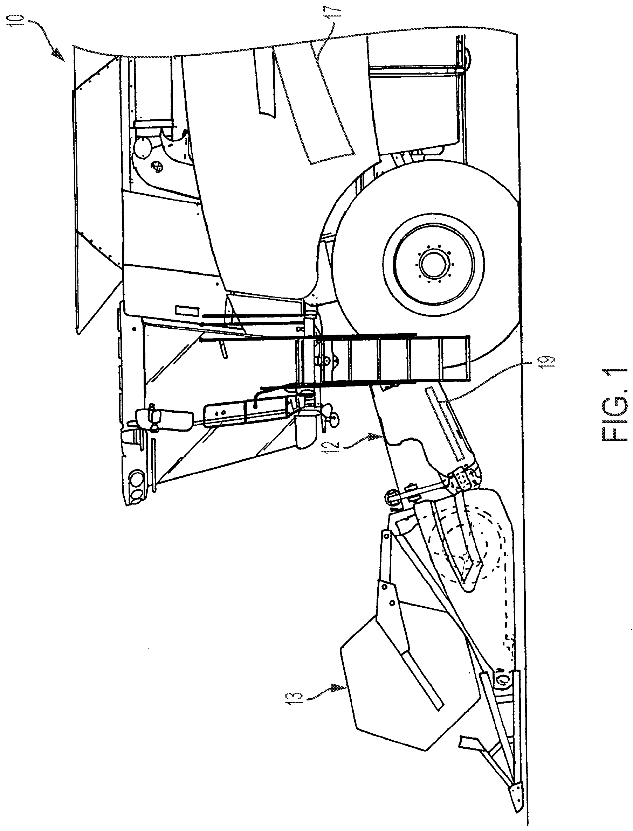

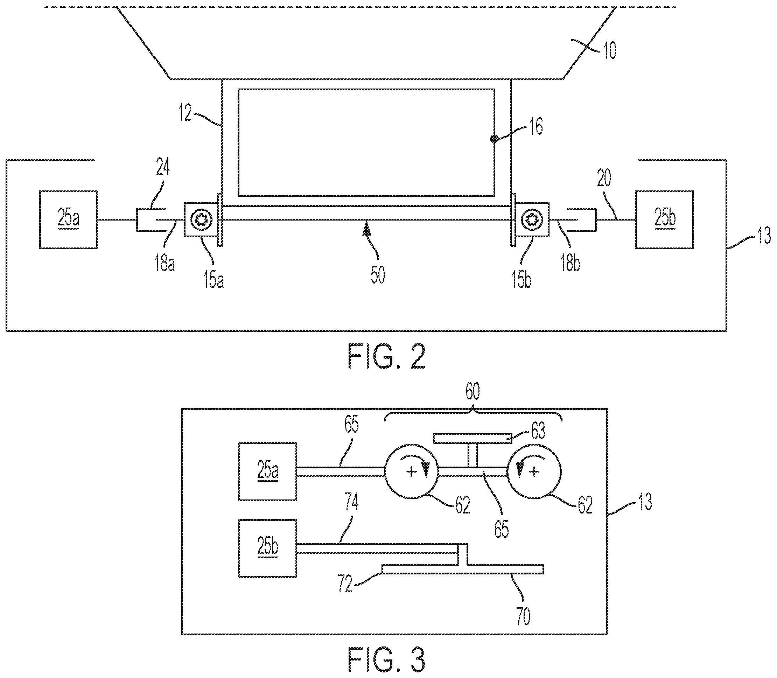

Referring now to the drawings, and more particularly to FIGs. 1 and 2, in accordance with the present invention, a header 13 is removably connected to a feeder 12 of a combine harvester 10.

Feeder 12 (also referred to herein as a feederhouse) comprises an inlet opening 16 through which crop material is received from header 13 and an outlet opening through which crop material is distributed to a threshing system 17 (shown schematically) of harvester 10. Feeder 12 also includes a conveyor system 19 for conveying crop from the inlet opening 16 to the outlet opening.

Power generated by the engine of the combine (for example) is transferred via a gear and/or belt arrangement to a transverse shaft 50 in the feeder 12. One end of shaft 50 is connected to a first gearbox 15a, and the opposite end of shaft 50 is connected to a second gearbox 15b. The gearboxes 15a and 15b (referred to collectively or individually as gearboxes 15) may also be referred to herein as a transmission and may include a clutch and a set of gears, for example. The gearboxes 15 provide controlled application of power, and are configured to operate at different gear ratios and have the capability to switch between the different gear ratios. This switching may be accomplished automatically by a control unit or manually by the operator of the combine. Each gearbox 15a and 15b can convert the input torque from the shaft 50 to achieve a desired speed at the output shaft 18a and 18b of the gearbox 15, respectively. Importantly, the gearboxes 15a and 15b are variable speed units that are configured to be operated at different output speeds/torques (if so desired), such that gearbox 15a can spin output shaft 18a at a first speed while the second gearbox 15b can spin output shaft 18b at a second speed that differs from the first speed. Output shafts 18a and 18b may be referred to herein as feeder jackshafts.

Although gearbox 15 is described as a mechanical transmission unit, it should be understood that each gearbox 15 may represent an electrically powered unit or a hydraulically powered unit, for example, that is capable of being operated at variable speeds.

The output shafts 18a and 18b are removably and non-rotatably connected to header drives 25a and 25b, respectively, on header 13. Rotation of output shaft 18a causes rotation of header drive 25a, and rotation of output shaft 18b causes rotation of header drive 25b. Header drives 25a and 25b may be operated at different speeds depending upon the rotational speed of the output shaft 18a and 18b that is connected thereto. Header drives 25 and 25b may also be referred to herein as header jackshafts.

Header 13 is, optionally, a corn header. Further details of a corn header are disclosed in U.S. Patent Nos. 7,749,055; 8,534,036 and 7,867,071. Turning now to FIG. 3, header drive 25a is connected to a row unit 60 comprising two opposing snapping rollers 62, a conveyor chain 63 positioned above rollers 62, and a mechanism 65 interconnecting rollers 62 and conveyor chain 63. Mechanism 65, which is shown schematically in FIG. 3 comprises gears, shafts, chains and/or pulleys for transferring motion from header drive 25a to row unit 60. Row units 60 are known in the art. Row unit 60 is shown for exemplary purposes and is not limited that which is shown. Header drive 25a, which is powered by feeder drive 15a, imparts motion to the components of row unit 60 for moving those components at a first speed (which may be a linear speed or rotational speed).

Header drive 25b is connected to a chopping unit 70 comprising a moveable (e.g., rotating) knife 72. Mechanism 74, which is shown schematically in FIG. 3 comprises gears, shafts, chains and/or pulleys for transferring motion from header drive 25b to knife 72. Chopping units 70 are known in the art. Chopping unit 70 is shown for exemplary purposes and is not limited that which is shown. Header drive 25b, which is powered by feeder drive 15b, imparts motion to the components of chopping unit 70 for moving knife 72 at a second speed (which may be a linear speed or rotational speed) that differs from the aforementioned first speed of the row unit.

Chopping unit 70 is associated with and positioned beneath row unit 60 to form a unit pair of corn header 13. It should be understood that although only one unit pair is shown, header 13 includes a plurality of unit pairs. Multiple chopping units 70 are connected to and powered by header drive 25b, and, similarly, multiple row units 60 are connected to and powered by header drive 25a. In operation, conveyor chain 63 moves the corn stalk into the space between rollers 62, rollers 62 shear the ear of corn from the stalk and delivers the ear of corn into the feeder 12, and knife 72 shears the stalk.

As noted in the background section, the feeder drives 15a and 15b may be used for independently driving two components on a header (for example) at different speeds. For example, feeder drives 15a and 15b may be used for independently driving the row units and chopping units at different speeds, as was described above. As another example, feeder drives 15a and 15b may be used for independently powering the lateral belts and sickle bar on a draper header. Including two variable speed PTO shafts on the combine feeder (as opposed to the header) reduces complexities and requirements for gear boxes in the headers.

## Claims

1. An agricultural vehicle (10) comprising:
a feederhouse (12) including a first output shaft (18a) that is configured to be releasably connected to a header (13), and a second output shaft (18b) that is also configured to be releasably connected to the header, wherein the first and second output shafts (18a, 18b) are configured to be operated at different rotational speeds on the feederhouse, and **characterised in that** the first and second output shafts (18a, 18b) are connected to a common shaft (50) on the feederhouse (12), one end of the common shaft (50) being connected to a first gearbox (15a) that is associated with the first output shaft (18a), an opposite end of the common shaft (50) being connected to a second gearbox (15b) that is associated with the second output shaft (18b).

2. The agricultural vehicle of claim 1, wherein the feederhouse comprises an inlet opening (16) through which crop material is received from the header and an outlet opening through which crop material is distributed to a threshing system (17) of the agricultural vehicle.

3. The agricultural vehicle of claim 2, wherein the feederhouse comprises a conveyor system (19) for conveying crop from the inlet opening to the outlet opening.

4. The agricultural vehicle of claim 1, further comprising the header, wherein the header includes a first header drive (25a) that is releasably connected to the first output shaft, and a second header drive (25b) that is releasably connected to the second output shaft.

5. The agricultural vehicle of claim 4, wherein the header is a corn header (13), and the first header drive is connected to a row unit (60) of the header, and the second header drive is connected to a chopping unit (70) of the header.

6. The agricultural vehicle of claim 5, wherein the chopping unit includes a knife (72).

7. A method of operating a feederhouse (12) of an agricultural vehicle (10) as claimed in any of the preceding claims, said method comprising:
rotating a first output shaft (18a) on the feederhouse at a first speed; and
rotating a second output shaft (18b) on the feederhouse at a second speed that is different from the first speed.

8. The method of claim 7 further comprising connecting the first output shaft to a first header drive (25a) of a header (13) of the agricultural vehicle, and connecting the second output shaft to a second header drive (25b) of the header, and operating the first and second header drives at different speeds.

9. The method of claim 8, wherein the header is a corn header (13), the first header drive is connected to a row unit (60) of the header, and the second header drive is connected to a chopping unit (70) of the header, and the row units and chopping units are operated at different speeds by virtue of the speeds of the first and second output shafts.

## Patentansprüche

1. Landwirtschaftliches Fahrzeug (10), umfassend:
ein Schrägförderer (12), der eine erste Abtriebswelle (18a), die konfiguriert ist, um lösbar mit einem Schneidwerk (13) verbunden zu werden, und eine zweite Abtriebswelle (18b) einschließt, die ebenfalls konfiguriert ist, um lösbar mit dem Schneidwerk verbunden zu werden, wobei die erste und die zweite Abtriebswelle (18a, 18b) konfiguriert sind, um mit unterschiedlichen Drehzahlen an dem Schrägförderer betrieben zu werden, und **dadurch gekennzeichnet, dass** die erste und die zweite Abtriebswelle (18a, 18b) mit einer gemeinsamen Welle (50) an dem Schrägförderer (12) verbunden sind, wobei ein Ende der gemeinsamen Welle (50) mit einem ersten Getriebe (15a) verbunden ist, das der ersten Abtriebswelle (18a) zugeordnet ist, wobei ein gegenüberliegendes Ende der gemeinsamen Welle (50) mit einem zweiten Getriebe (15b) verbunden ist, das der zweiten Abtriebswelle (18b) zugeordnet ist.

2. Landwirtschaftliches Fahrzeug nach Anspruch 1, wobei der Schrägförderer eine Einlassöffnung (16), durch die Erntegut von dem Schneidwerk aufgenommen wird, und eine Auslassöffnung umfasst, durch die Erntegut an ein Dreschsystem (17) des landwirtschaftlichen Fahrzeugs verteilt wird.

3. Landwirtschaftliches Fahrzeug nach Anspruch 2, wobei der Schrägförderer ein Fördersystem (19) zum Fördern von Erntegut von der Einlassöffnung zu der Auslassöffnung umfasst.

4. Landwirtschaftliches Fahrzeug nach Anspruch 1, ferner umfassend das Schneidwerk, wobei das Schneidwerk einen ersten Schneidwerkantrieb (25a), der lösbar mit der ersten Abtriebswelle verbunden ist, und einen zweiten Schneidwerkantrieb (25b), der lösbar mit der zweiten Abtriebswelle verbunden ist, einschließt.

5. Landwirtschaftliches Fahrzeug nach Anspruch 4, wobei das Schneidwerk ein Maisschneidwerk (13) ist und der erste Schneidwerkantrieb mit einer Reiheneinheit (60) des Schneidwerks verbunden ist und der zweite Schneidwerkantrieb mit einer Häckseleinheit (70) des Schneidwerks verbunden ist.

6. Landwirtschaftliches Fahrzeug nach Anspruch 5, wobei die Häckseleinheit ein Messer (72) einschließt.

7. Verfahren zum Betreiben eines Schrägförderers (12) eines landwirtschaftlichen Fahrzeugs (10) nach einem der vorstehenden Ansprüche, wobei das Verfahren Folgendes umfasst:
Drehen einer ersten Abtriebswelle (18a) an dem Schrägförderer mit einer ersten Drehzahl; und
Drehen einer zweiten Abtriebswelle (18b) an dem Schrägförderer mit einer zweiten Drehzahl, die sich von der ersten Drehzahl unterscheidet.

8. Verfahren nach Anspruch 7, ferner umfassend das Verbinden der ersten Ausgangswelle mit einem ersten Schneidwerkantrieb (25a) eines Schneidwerks (13) des landwirtschaftlichen Fahrzeugs, und das Verbinden der zweiten Ausgangswelle mit einem zweiten Schneidwerkantrieb (25b) des Schneidwerks, und das Betreiben des ersten und des zweiten Schneidwerkantriebs mit unterschiedlichen Drehzahlen.

9. Verfahren nach Anspruch 8, wobei das Schneidwerk ein Maisschneidwerk (13) ist, der erste Schneidwerkantrieb mit einer Reiheneinheit (60) des Schneidwerks verbunden ist und der zweite Schneidwerkantrieb mit einer Häckseleinheit (70) des Schneidwerks verbunden ist, und die Reiheneinheiten und Häckseleinheiten aufgrund der Drehzahlen der ersten und der zweiten Abtriebswelle mit unterschiedlichen Geschwindigkeiten betrieben werden.

## Revendications

1. Véhicule agricole (10) comprenant :
une chambre d'alimentation (12) comportant un premier arbre de sortie (18a) qui est conçu pour être relié de manière amovible à une tête de coupe (13), et un second arbre de sortie (18b) qui est également conçu pour être relié de manière amovible à la tête de coupe, dans lequel les premier et second arbres de sortie (18a, 18b) sont conçus pour fonctionner à des vitesses de rotation différentes sur la chambre d'alimentation, et **caractérisé en ce que** les premier et second arbres de sortie (18a, 18b) sont reliés à un arbre commun (50) sur la chambre d'alimentation (12), une extrémité de l'arbre commun (50) étant reliée à une première boîte de vitesse (15a) qui est associée au premier arbre de sortie (18a), une extrémité opposée de l'arbre commun (50) étant reliée à une seconde boîte de vitesse (15b) qui est associée au second arbre de sortie (18b).

2. Véhicule agricole selon la revendication 1, dans lequel la chambre d'alimentation comprend une ouverture d'entrée (16) par laquelle la matière récoltée est reçue de la tête de coupe et une ouverture de sortie par laquelle la matière récoltée est distribuée à un système de battage (17) du véhicule agricole.

3. Véhicule agricole selon la revendication 2, dans lequel la chambre d'alimentation comprend un système de transport (19) pour le transport de la récolte de l'ouverture d'entrée à l'ouverture de sortie.

4. Véhicule agricole selon la revendication 1, comprenant en outre la tête de coupe, dans lequel la tête de coupe comporte un premier entraînement de tête de coupe (25a) qui est relié de manière amovible au premier arbre de sortie, et un second entraînement de tête de coupe (25b) qui est relié de manière amovible au second arbre de sortie.

5. Véhicule agricole selon la revendication 4, dans lequel la tête de coupe est une tête de coupe de maïs (13), et le premier entraînement de tête de coupe est relié à une unité de rangée (60) de la tête de coupe, et le second entraînement de tête de coupe est relié à une unité de hachage (70) de la tête de coupe.

6. Véhicule agricole selon la revendication 5, dans lequel l'unité de hachage comporte un couteau (72).

7. Procédé permettant de faire fonctionner une chambre d'alimentation (12) d'un véhicule agricole (10) selon l'une quelconque des revendications précédentes, ledit procédé comprenant :
la rotation d'un premier arbre de sortie (18a) sur la chambre d'alimentation à une première vitesse ; et
la rotation d'un second arbre de sortie (18b) sur la chambre d'alimentation à une seconde vitesse qui est différente de la première vitesse.

8. Procédé selon la revendication 7, comprenant en outre la liaison du premier arbre de sortie à un premier entraînement de tête de coupe (25a) d'une tête de coupe (13) du véhicule agricole, et la liaison du second arbre de sortie à un second entraînement de tête de coupe (25b) de la tête de coupe, et la mise en fonctionnement des premier et second entraînements de tête de coupe à des vitesses différentes.

9. Procédé selon la revendication 8, dans lequel la tête de coupe est une tête de coupe de maïs (13), le premier entraînement de tête de coupe est relié à une unité de rangée (60) de la tête de coupe, et le second entraînement de tête de coupe est relié à une unité de hachage (70) de la tête de coupe, et les unités de rangée et les unités de hachage fonctionnent à des vitesses différentes grâce aux vitesses des premier et second arbres de sortie.
